# EUROPEAN PATENT SPECIFICATION

(11) **EP 2 592 985 B1**
(45) Date of publication and mention of the grant of the patent: **31.08.2016**
(21) Application number: 11741014.2
(22) Date of filing: 15.07.2011
(51) Int. Cl.: A47K 10/42, B65D 75/58, B65D 83/08, A47K 10/32

(54) **WIPES PRODUCT**
WISCHTUCHPRODUKTE
PRODUIT POUR LINGETTES

(30) Priority: 25.10.2010 US 910995; 16.07.2010 US 364968 P
(43) Date of publication of application: 22.05.2013
(73) Proprietor: The Procter & Gamble Company, Cincinnati, OH 45202 (US)
(72) Inventor: GEHRING, Debra, Gay, Cincinnati Ohio 45231 (US)
(74) Representative: Mather, Peter Geoffrey
(86) International application number: PCT/US2011/044099
(87) International publication number: WO 2012/009593

(56) References cited:
- EP-A1- 0 952 088

## Description

### FIELD OF THE INVENTION

Disclosed herein is a refillable wipes container for storing and dispensing wipes. Specifically, there is disclosed a refillable wipes container that is configured to provide a lock-and-key benefit such that only a particular style of refill pack will provide the desired function when used in conjunction with the wipes container.

### BACKGROUND OF THE INVENTION

Cleaning wipes are generally sold in plastic tubs, tubes, or other containers that are configured to permit a user to extract a wipe from the container, for example, by pulling the wipe through an opening in the container. When a wipes container includes an opening through which wipes can be withdrawn, the opening is typically covered by a liquid or vapor impervious lid or other barrier, especially if the wipes are wet wipes. It is not uncommon for a wipes tub to be sold pre-loaded with a supply of wipes, which can be replenished with additional wipes when the original supply of wipes is depleted. Since a significant portion of the cost of purchasing wipes may be related to producing a rigid plastic wipes tub, it may be desirable to use commonly known refill packs of wipes, which can be provided in a cheaper and/or more environmentally friendly package. But in at least some instances, wipes and/or refill packs of wipes provided by different suppliers may be similarly or even identically sized. Thus, a consumer may purchase a preloaded, refillable wipes container provided by a first manufacturer and refill it with wipes provided by a second, different manufacturer, which is generally undesirable to the first manufacturer.

Refillable wipes tubs typically include some type of indicia (e.g., graphic, trademark, unique shape or feature) which identifies the source of the wipes, a type of wipes stored in the tub, and/or a characteristic of a type of wipes stored in the tub. Such identifying indicia are generally intended to communicate a message to the consumer related to the quality or brand equity of the wipes product (i.e., the quality of the product and/or reputation of the provider). However, when a refillable wipes tub from one manufacturer is refilled with wipes from another manufacturer, users who are not aware that the wipes and the tub are from different providers may associate the wipes in the tub with the provider of the tub. In instances where the refill wipes are inferior to the wipes supplied by tub provider, a user may associate the inferior product with the provider of the tub, which could undesirably affect the user's opinion of the tub provider and/or one or more of the products supplied by the tub provider.

Refillable wipes container typically include a major lid that is hingedly joined to a wall of the container such that a user can open the major lid and place a new wipes cartridge or stack of wipes in the interior storage space of the wipes container. The major lid generally provides a moisture impervious barrier to minimize exposure of the contents of the wipes container to the external environment. The major lid typically includes a dispensing orifice for enabling a user to access the wipes stored in the container. Since it is common to store wet wipes in refillable containers, the dispensing orifice is typically covered with a moisture impervious barrier. In some instances, the moisture impervious barrier is in the form of a minor lid that is opened by a spring when a user presses a button on the container. While the button/spring configuration may provide a means for accessing the wipes and preventing substantial moisture loss from wet wipes, such a configuration may also add undesirable cost and complexity to the manufacturing process. EP-A-0 952 088, published on October 27th 1999, discloses a container for containing wipes. The container body is provided with a catching projection for catching a locking projection formed on the hinged lid.

Accordingly, it would be desirable to provide a refillable wipes container that functions as intended only when refilled with a particular type of wipes. It would also be desirable to provide a refillable wipes container that has a less complex mechanism for providing a moisture impervious barrier and accessibility to wipes stored in the container.

### SUMMARY OF THE INVENTION

In order to provide a solution to the problems stated above, there is disclosed herein a wipes product comprising a reusable container for storing and dispensing wipes. The refillable wipes container including a major lid, a base, and one or more walls. The lid, base, and wall(s) define an interior storage space for storing wipes. A dispensing orifice is disposed in the major lid, which enables a user to access wipes stored in the interior storage space. A lock portion is disposed on the major lid, the lock portion being configured to engage with a key portion such that a substantially moisture impermeable barrier is formed over the dispensing orifice when the lock portion and the key portion are engaged. The wipes product further comprises a package of wipes comprising the key portion, the package of wipes being disposed in the interior storage space.

### BRIEF DESCRIPTION OF THE DRAWINGS

Figure 1 is a perspective view of a wipes container in an open configuration.
Figure 2A is a front view of a wipes container in a closed configuration and a wipes cartridge for the wipes container.
Figure 2B is a front view of the wipes container of Figure 2A in a closed configuration, with the wipes cartridge disposed in the wipes container.
Figure 3 is a perspective view of a wipes container in a closed configuration, wherein the lid of the wipes container includes a channel.
Figure 3A is a cross-sectional view of a portion of the lid and of the channel of the wipes container of Figure 3.
Figure 4 is a perspective view of a wipes container with top and bottom container shells, in an open configuration.
Figure 5A is a perspective view of a wipes cartridge with a flap in a closed configuration.
Figure 5B is a perspective view of the wipes cartridge of Figure 5A, with the flap in an open configuration.
Figure 5C is a side view of the wipes cartridge of Figure 5B.
Figure 6A is a perspective view of a wipes container with top and bottom container shells, in a closed configuration, with a wipes cartridge disposed in the wipes container, and a flap from the wipes cartridge extending through the top container shell, with the flap in an open position.
Figure 6B is a perspective view of the wipes container of Figure 6A, with the flap in a closed position.
Figure 7 is a top view of a wipes container in a closed configuration, with a wipes cartridge disposed in the wipes container, wherein an orifice of the wipes cartridge is aligned with an orifice of the wipes container.

### DETAILED DESCRIPTION OF THE INVENTION

### Definitions

"Channel" means a narrow opening that extends through a substrate or component and has a length that is substantially greater than its width. For example, a channel may be an opening that extends through the lid of a wipes container and has a length that is at least 3 times its width.

"Disposed on" and variations thereof refer to the placement or position of one element relative to another element, where the elements are connected to or in physical contact with one another. For example, when a first element is disposed on a second element, the first and second elements may be joined together or formed together to provide an integral or unitary article. A first element may also be disposed on a second element when the first element is applied to the second element, for example, by a printing method or a coating method.

"Joined" refers herein to the attachment together of two or more components, either by direct affixment of a first element to a second element or by affixment of the first element to an intermediate element which is affixed to the second element.

"Moisture impermeable" or "moisture impervious" means that an element resists and, ideally, prevents the passage of liquid and/or gaseous compositions (e.g., water and/or water vapor) from one side of the element to the opposing side of the element. For example, a wipes container for storing wet wipes will typically include one or more walls that resist the passage and/or penetration of liquid water and water vapor through the wall of the wipes container in order to prevent or at least delay moisture loss from the wet wipes. Thus, the walls of the container are said to be moisture impermeable.

"Nonwoven" refers to a porous, fibrous structure made from an assembly of continuous fibers, coextruded fibers, noncontinuous fibers or combinations thereof, without weaving, knitting, or felting. Non-limiting examples of suitable processes for making a nonwoven include spunbonding, carding, meltblowing, air laying, wet laying, coform, and the like. The nonwoven structure may comprise one or more layers of such fibrous assemblies, wherein each layer may include continuous fibers, coextruded fibers, noncontinuous fibers and combinations thereof.

"Reusable" means that a component may be used more than once for the same function without showing significant loss of utility or degradation of properties. A refillable wipe container is an example of a reusable article.

"Wipe" refers a fibrous substrate, for example a nonwoven, used for cleaning skin and other surfaces. "Wet-wipe" refers to a wipe that includes more than 10% of a liquid composition by weight based on the weight of the wet-wipe. The liquid composition may be impregnated into the wipe or the liquid composition may be fugitive (i.e., free to move from one portion of the wet wipe to another portion).

Various types of disposable wiping products such as, for example, wipes, facial tissues, bath tissues, paper towels, and napkins are commonly used by consumers. Such wiping products can include dry products or saturated or pre-moistened wiping products. Saturated or pre-moistened wiping products are used in a variety of different wiping and polishing applications. Pre-moistened wipes are commonly sold in a stack of individual, folded sheets packaged in a plastic container or tub for use as baby wipes. In other applications, the wipes are treated with an antibacterial agent and packaged as a sanitary wipe. Refillable wipes tubs suitable for storing and dispensing wipes include tubs formed from material(s) and by process(es) commonly known in the art. For example, some rigid plastic wipes containers are formed from polypropylene in an injection molding process. In another example, a refillable wipes container may be formed from thermomolded foam of ethylene vinyl acetate to provide a tub with desirable sensory appeal such as feeling warm to the touch. Wipes tubs suitable for use herein may be made from a single piece of material as a unitary tub, or be assembled from two or more discrete parts joined to together to form an integral tub. Nonlimiting examples of suitable wipes container materials and processes for making wipes containers are disclosed in U.S. Publication Nos. 2008/0083774; 2008/0222929; 2008/0223868; and 2009/0321299.

Refill packs for use with refillable wipes containers are typically formed from flexible, liquid and/or vapor impermeable materials known in the art. The material used to make the refill packages are generally less expensive than the material used to make the refillable tub and in at least some instances may be more environmentally friendly (e.g., by being formed from biodegradable material or taking up less space in a landfill). For example, a refill pack may be formed from a relatively thin, flexible polyolefin material in a commonly known flow wrap process. In certain embodiments it may be desirable to form the refill package and/or the wipes contained therein from biodegradable materials, such as polyester, polylactic acid, and/or oxo-biodegradable polyolefin.

Wipes suitable for use herein may be in the form of a nonwoven web, a film, or a laminate of two or more layers of nonwoven and/or film material. The fibers used to form nonwoven materials suitable for use herein may be formed from naturally occurring materials (e.g., cellulose, cotton, rayon, silk) or synthetic materials (e.g., elastic and/or plastic polyolefin; polyester; nylon) or a combination of natural and synthetic fibers. The fibers may be long fibers or short fibers, sometimes referred to as staple fibers, or a combination of long and short fibers. The fibers may have the same or different shapes (e.g., round, rectangular, multi-lobal, combinations of these), diameters (i.e., denier), opacity, strength, elasticity, etc. The fibers and/or layers, when a laminate structure is desired, may be joined to one another by any suitable process known in the art (e.g., thermal bonding, high pressure bonding, adhesive, cohesive, mechanical bonding, ultrasonic, autogenous bonding, combinations of these and the like). The wipe substrate may include apertures and/or regions of different density. The wipes may include a cleaning composition (e.g., lotion, personal care composition, antibacterial composition, astringent composition, hard surface cleaning composition). The cleaning composition may be in form of a liquid, solid, paste, gel, emulsion or other suitable form for applying to a surface. In some instances, it may be desirable to provide a liquid composition on the wipe substrate that includes a volatile component and/or water. The wipes may be joined to one another to provide "pop-up" dispensing. That is, when a wipe is dispensed from the tub, the next wipe is partially dispensed such that it can be readily grasped by a user without having to reach into the container). Configurations for providing pop-up type wipes include, for example, perforation, interleaving (e.g., c-folding, z-folding), adhesive bonding, friction bonding, combinations of these and the like. Wipes may be dry (e.g., include less than 10% water by weight based on the weight of the wipe) or wet (e.g., more than 10%, 20%, 50% or even 80% by weight based on the weight of the wipe). The wipe substrate may include a personal care composition and/or cleaning composition disposed thereon and/or impregnated therein. Nonlimiting examples of wet and dry wipes and the compositions for use therewith are disclosed in U.S. Publication Nos. 2005/0008680; 2005/0150784A1; and U.S. Pat. Nos. 7581273; 5,620,694; 5,744,149; 5,972,361; 5,980,931; 6,063,397; 6,074,655; 6,132,746; 6,153,208; 6,280,757; 6,338,855; and 6,495,151.

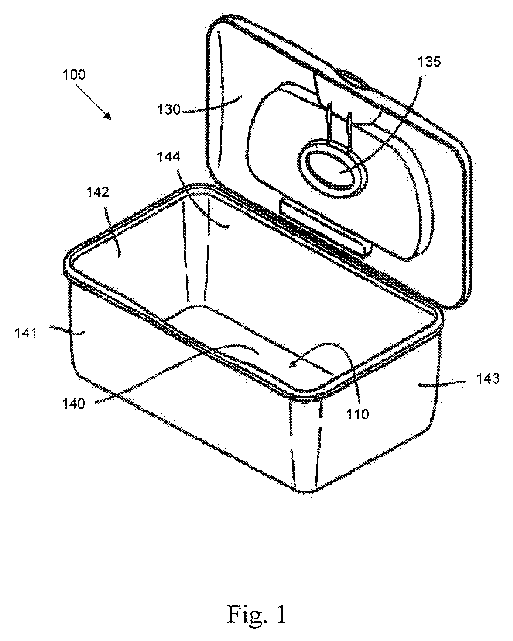

FIG. 1 shows an example of a refillable tub 100. The tub 100 may include one or more walls such as a front wall 141, a back wall 144, and opposing side walls 142 and 143. The tub 100 may include a major lid 130 with an orifice 135 extending therethrough and a base 140. The wall(s) 141 - 144, the major lid 130, and the base 140 define an interior storage space 110 configured to receive one or more wipes. The major lid 130 may be joined or joinable to one or more of the walls 141 - 144. For example, the major lid 130 may be hingedly joined to the rear wall 144. In certain embodiments, the major lid 140 may be joinable to one or more of the walls 141 - 144 through, e.g., one or more snaps, slots/grooves, tabs/slots, or other known mechanical fastening systems. In certain embodiments, the major lid 130 may be a discrete element that can be removed entirely from the container 100.

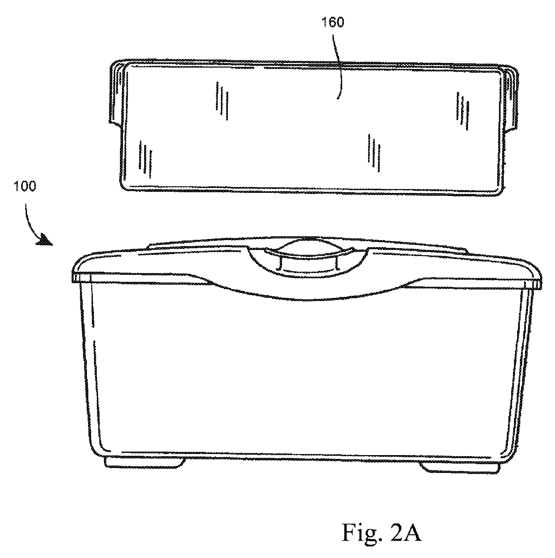

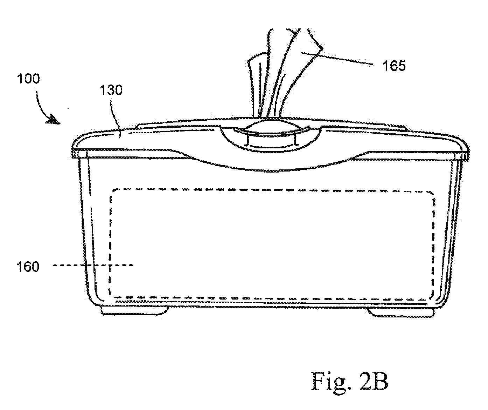

FIG. 2A shows an example of a wipes cartridge 160 that may be placed in the storage space 110 of the wipes container 100 to replenish a depleted supply of wipes. FIG. 2B shows a wipes product that includes a wipes cartridge 160 disposed in a wipes container 100 and a wipe 165 extending through an opening in the major lid 130.

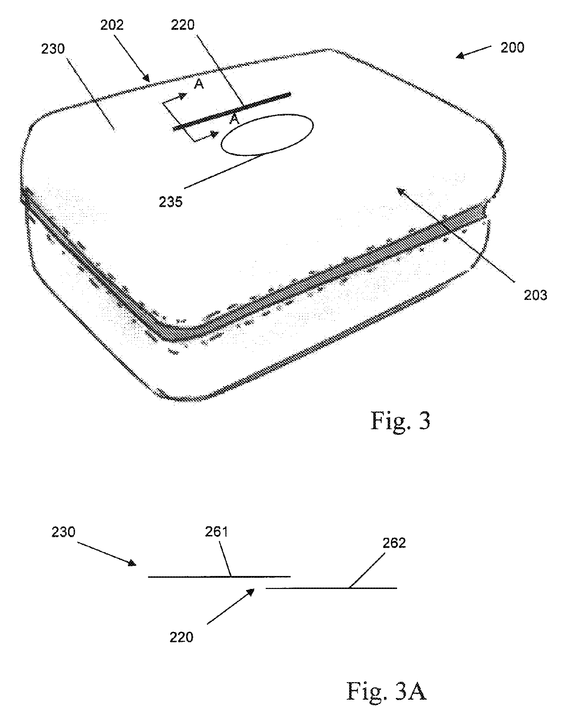

FIG. 3 shows an exemplary wipes container 200 for use herein. The wipes container 200 may include a dispensing orifice 235 that extends through the major lid 230 and through which wipes are dispensed. The wipes container 200 may include a lock portion 220. The lock portion of the container 200 provides an element that is engageable with a complementary key portion. In this example, the lock portion is configured as a long, narrow opening or channel 220 through which a key portion can extend. The channel is positioned such that it is substantially parallel to the back edge 202 and front edge 203 of the wipes container 200. The channel may be any suitable size or shape, as desired, as long as it is engageable with the key portion to provide a suitable lock and key arrangement. However, in certain embodiments, it may be important to provide a channel that is small enough to minimize the amount moisture that can escape from inside the container 200, e.g., when wet wipes are stored therein, but large enough to permit a user to easily insert the key portion therethrough. For example, the channel 220 may include two or more overlapping portions formed from a flexible material that present a tortuous path for water vapor or gas, but do not substantially inhibit insertion of the key portion. FIG. 3A shows a cross-section of the channel 220 along line A-A. As can be seen in the example in FIG. 3A, the channel 220 is defined by two overlapping portions 261 and 262. The upper and lower overlapping portions 261 and 262 overlap to create a tortuous path for water vapor or other volatile compositions to travel in order to escape the container 200. In another example, the channel may be formed by coplanar portions of the major lid 230 (i.e., do not substantially overlap) but which are in close proximity to one another such that the channel is very narrow (i.e., less than 1 mm, 0.5 mm, less than 0.1 mm, or even abutting against one another).

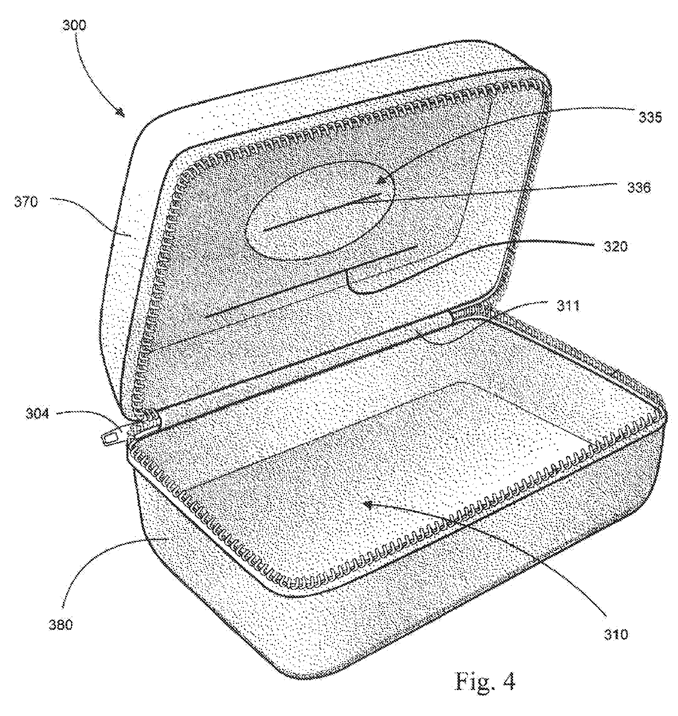

FIG. 4 shows an example of a wipes container 300 suitable for use herein. The wipes container 300 may include a top container shell 370 and a bottom container shell 380. The top container shell 370 may perform a similar function as the major lid described above, while the bottom container shell 380 may include a base for the container 300, as described above. The container 300 and/or shells 370 and 380 may be formed from a single piece of material (i.e., to form a unitary container) or from 2 or more discrete pieces of material that are joined together. The top and bottom container shells 370, 380 may be hingedly joined to one another, for example, by hinge 311, and thus allow the shells 370 and 380 to cooperate to form an accessible internal storage space 310 for storing a stack of wipes or a cartridge. In certain embodiments, hinge 311 may be formed by scoring a portion of a unitary container to create a zone of relative weakness such that the portions of the container 311 on either side (e.g., top and bottom shells 370 and 380) can at least partially rotate about the scored portion. The container 300 may include a suitable fastening system to open and close the container. The fastening system may include any suitable fastening means known in the art including, without limitation, mechanical fasteners that have two or more interlocking elements; buttons; snaps; clasps; straps; belts; pins; magnets; hook/loop type fasteners, hook/hook type fasteners, and tab/slot type fasteners, slide locks, combinations of these and the like. One particularly suitable fastening system includes a "zipper" type fastener 304, as shown in FIG. 4.

The wipes container 300 may include an orifice 335 for enabling a user to access wipes stored in the interior storage space 310. In certain embodiments, the orifice 335 may include a liquid and/or vapor impermeable material (e.g., barrier film/membrane) that extends across the orifice 335 to inhibit moisture loss from any wet wipes that may be stored in the container 300. The moisture impermeable barrier film may include a slit 336 to permit wipes to pass through the orifice 335. It may be desirable to configure the slit 326 to minimize the open area through which moisture vapor can pass, while at the same time providing suitable resistance to the wipes such that "chaining" (i.e., when the individual wipes do not properly separate from one another during dispensing) and "fallback" (i.e., when a wipe falls back into the storage space rather than "popping up" for use) do not occur. The exemplary wipes container 300 shown in FIG. 4 may also include a lock portion in the form of a channel 320. The lock portion is configured to engage with a key portion, which is described in more detail below.

In certain embodiments, it may be desirable to provide a wipes container formed from a material that provides a desirable sensory perception (e.g., warm, soft), such as a cloth-like material. For example, foamed synthetic polymeric materials may be used to provide wipes containers having an effusivity and hardness that users perceive as being desirably warm to the touch and of sufficient quality or durability to be reusable. One particularly suitable example of a foamed, synthetic material for use herein includes foamed poly(ethylene vinyl acetate) ("EVA"). EVA is typically made by copolymerizing ethylene and vinyl acetate monomers. The EVA may be foamed and formed into any shape, as desired. Suitable examples of EVA and methods of making and shaping EVA foam are described in PCT Publication No. WO 01/02473, filed by Hsu, et al., on June 28, 2000. EVA foams may include some percentage of EVA such as, for example, greater than or equal to 1% EVA by weight, based on the weight of the EVA foam. However, difficulties may arise when attempting to produce EVA foams that have relatively low levels of EVA (e.g., less than 5%). Therefore, it may be desirable to select EVA foams that are greater than 10% EVA by weight, based on the weight of the EVA foam, for example, between 12% and 18% EVA. Higher levels of EVA may also be used, for example, any amount of EVA between 18% and 100%, as long as a wipes container that includes such EVA foam provides the desired effusivity value. Suitable effusivity values at 25° C and 32° C include values of less than 550, for example, between 100 and 400, 200 and 300, over any value within these ranges, when measured according to the Sensory Warmth Test detailed in copending U.S. Publication No. 2009/0321299, filed by Gehring, et al. A particularly suitable example of a synthetic polymeric material for use in the wipes containers disclosed herein is thermomolded EVA sold under the product name Solatex 40, available from Tacosola, located in Novo Hamburgo, Brazil. Other suitable polymers and process are disclosed in U.S. Pub. No. 2009/0321299.

When the supply of wipes in a reusable or refillable wipes container is depleted, the supply may be replenished with a fresh supply of wipes. Typically, refill packages of wipes, sometimes referred to as cartridges, are configured to be placed directly into a refillable wipes tub. As mentioned previously, however, some refill cartridges may fit into more than one type of tub (e.g., tubs provided by a competitor in the marketplace). In order to limit the refill cartridges used to replenish the wipes to those supplied by the provider of the wipes tub, the cartridge may include a key portion that engageably complements a lock portion disposed on the wipes container. That is, the lock and key portions, when engaged with one another, provide a wipes product that functions as intended (e.g., properly dispenses wet wipes and helps reduce moisture loss from the container).

In certain embodiments, the cartridge may include a key portion in the form of a flexible flap that can be inserted through a channel formed in the wipes container. Once inserted through the channel, the flap may extend far enough to be placed over the dispensing orifice of the container. When formed from a moisture impermeable material, the flap may provide a moisture barrier over the dispensing orifice of the container without undesirably interfering with a user's ability to access the wipes stored in the container. The flap may be initially joined to the refill cartridge with an adhesive so that the flap is not unintentionally disengaged from the refill cartridge prematurely, which may uncover the orifice in the refill container and expose the wipes to the external environment. In certain embodiments, The flap may include an adhesive or other fastener (e.g., hook/loop, tab/slot, button/hole, snap, plug/seal, cohesive and the like) that permits a user to releasably and reattachably join at least a portion of the flap to at least a portion of the container once the cartridge is opened and the flap is extended through the channel. In this way, the flap can be securely positioned over the orifice of the container. The flap may be configured to include other features (e.g., gaskets, seals, and the like) that function together or independently to help reduce moisture loss from inside the container and/or extend the useful life of a wipe stored in the container. Nonlimiting examples of such features are disclosed in U.S. Pat. No. 6,910,579, issued on June 28, 2005 to Reinke, et al.

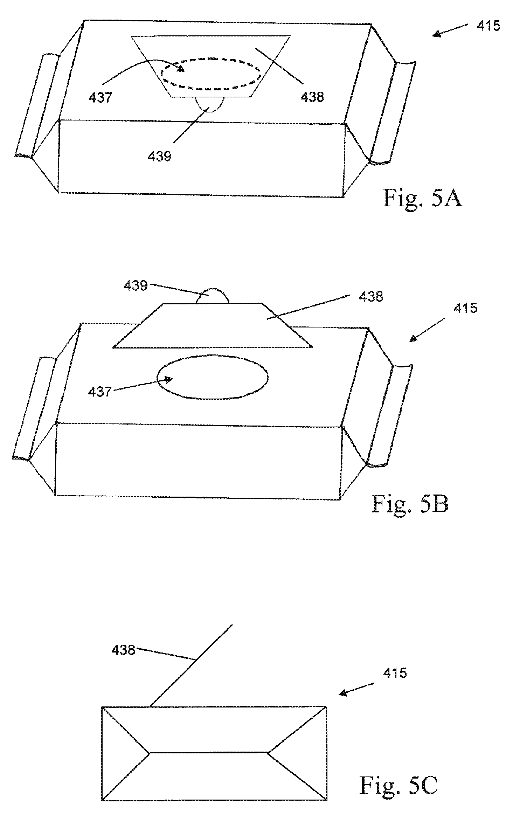

FIG. 5 shows an exemplary embodiment of a wipes cartridge 415 suitable for use herein. The wipes cartridge 415 may include outer packaging formed from one or more layers of flexible, vapor impermeable material such as a polypropylene and/or polyethylene film. The outer packaging may be formed as a laminate material of two or more layers of the same or different material formed by any suitable process known in the art, such as coextrusion. The outer packaging material may be selected to provide a variety of features. For example, the outer packaging may be sealable and exhibit a water vapor transmission rate (MVTR) of less than 5 g/m²/day, when tested according to a standard method for determining MVTR. In certain embodiments, the outer package may have an exterior surface exhibiting a "soft" or matte finish. Still further, the package material may exhibit relatively low noise levels when handled or manipulated, thereby contributing to the perception of softness. Nonlimiting examples of material suitable for forming a refill cartridge are disclosed in U.S. Publication Nos. 2006/0093800 and 2006/0113211. The refill cartridge 415 includes an orifice 437 in the outer packaging through which wipes may be dispensed. The location of the orifice may be selected to coincide with the orifice of a particular wipes container such that the wipes can be desirably dispensed through both orifices simultaneously. In certain embodiments, the orifice of the wipes container and/or refill cartridge may be offset (i.e., not centered) such that when a refill package having an orifice that is centered is placed in the tub, the "centered" orifice of the refill cartridge will not align with the "offset" orifice in the container.

In certain embodiments, the refill cartridge 415 may include a flap 438. The flap 438 may be sized and/or positioned to cover the orifice 437 of the cartridge 415. The flap 438 may be formed from the same material and/or during the same process as the cartridge 415, or the flap 438 may be formed from and different material and/or separate process and subsequently joined to the cartridge 415. The flap 438 may include a tab 439 or other suitable feature that enables a user to easily grasp and manipulate the flap 438. In certain embodiments, the flap 438 may be openably and/or refastenably joined to the outer packaging of the cartridge 415. For example, the flap 438 may be secured to the outer packaging with one or more adhesives (e.g., pressure sensitive adhesive). In certain embodiments, the flap 438 is configured to provide a refastenable barrier over the orifice 437 of the cartridge 415, thereby allowing the refill cartridge 415 to be used as a stand-alone product (i.e., a product that can be used as intended without placing the product in a reusable tub). In certain embodiments, the flap 438 may be formed by perforating or scoring a portion of the outer packaging to provide areas of weakness that define the edges of the flap 438 such that a user is able to tear the flap 438 away from the outer packaging without damaging or otherwise impairing the function of the flap 438 and/or outer packaging. In certain embodiments, the tab 439 or other grasping feature may be joined to the outer packaging in the same or different manner as the flap 438. However, it is to be appreciated that it may be desirable for the tab 439 to remain unsecured from the outer packaging to provide a more easily graspable tab 439. The cartridge 415 may include a mechanical fastening system such as a hook and loop type mechanical fastening system. The flap 438 and/or tab 439 may include one part of the fastening system (e.g., the hooks) while the outer packaging includes the complementary portion of the fastening system (e.g., the loops). FIG. 5A shows the flap 438 in a closed configuration. The flap 438 covers the underlying orifice 437, thereby provides a barrier to moisture or volatile compositions that may be in or on the wipes. In certain embodiments it may be desirable to provide a flap 438 with sufficient stiffness to minimize or even prevent the flap 438 from undesirably bending, wrinkling, folding, etc., when inserting the flap 438 through a channel or other locking portion of a wipes container. For example, the flap 438 may have a bending modulus of between 10 and 40 Pa; 15 and 35 Pa; 20 and 30 Pa or even between 23 and 28 Pa, when measured according to a suitable 3-point bending test using a crosshead speed of 1 mm/second, a longitudinal length of 2 cm, and a distance between supports of 3 cm.

FIG. 5B shows the cartridge 415 with the flap 438 in an open configuration. Thus, the orifice 437 and the supply of wipes in the cartridge 415 are accessible to a user. FIG. 5C shows a side view of the cartridge 415 with the flap 438 in the open position.

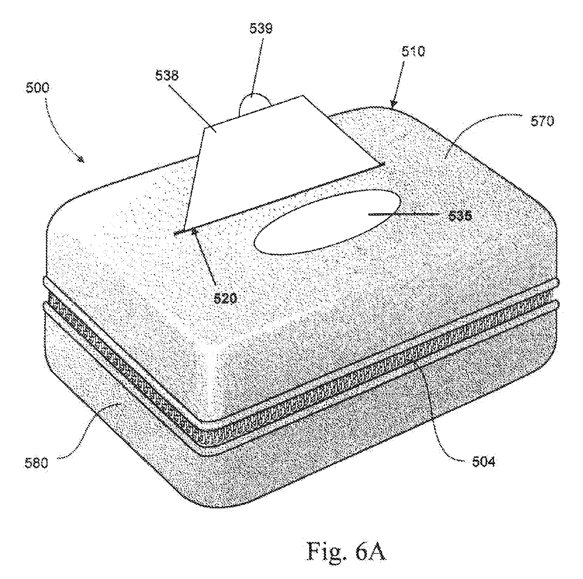

FIG. 6A shows an exemplary wipes product 500. The wipes product 500 includes a wipes container 510 and a refill cartridge disposed therein. The wipes container 510 includes a top container shell 570 and an opposing bottom container shell 580. The top container shell 570 has an orifice 535 that extends therethrough and provides access to the internal storage space of the container 510. The orifice 535 of the container is desirably aligned with the orifice of the refill cartridge. A flap 538, which is joined to the refill cartridge, extends through a channel 520 in the top container shell 570. The flap 538 may includes a grasping tab 539 or other graspable feature that enables a user to more easily manipulate the flap 520. The flap 538 should be sized such that, when properly positioned, it substantially covers the orifice 535 of the container shell, thereby providing a moisture barrier between the external environment and the internal storage space. In this example, the flap 538 acts as the key portion and the channel 520 acts as the locking portion. Thus, the flap 538 and the channel 520 are engageable (i.e., the flap 538 can be inserted through the channel 520) such that the wipes product 500 functions as intended when the lock portions and key portion are engaged (i.e. provides a reusable wipes container 510 that keeps wipes from drying out and/or being contaminated by the external environment).

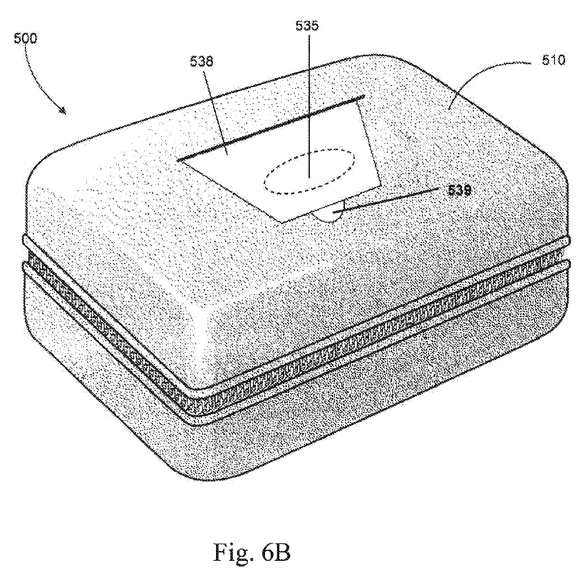

In a particularly suitable embodiment, the flap 538 is refastenably attached or attachable to the container 510. The flap 538 may include an adhesive or cohesive that is attachable to a portion of the wipes container 510, but not a wipe substrate or skin. Alternatively or additionally, the flap 538 may include an adhesive that adheres to the wipe substrate. The adhesive may be the same adhesive used to secure the flap 538 to the outer packaging of the refill cartridge. In certain embodiments, a mechanical fastening system may be used to secure the flap 538 and/or tab 539 to the container 510. For example, the flap 538 and/or tab 539 may include a portion of a hook and loop type fastening system (e.g., the hooks) and the container 510 may include the complementary portion of the fastening system (e.g., the loops). In another example, the container 510 may include a slot positioned such that the tab 539 can be inserted into the slot to secure the flap 538 over the orifice 535. In other examples, snaps, buttons, magnets, and/or electrostatic fastening systems may be exploited for use herein. FIG. 6B shows a wipes product 500 with the flap 538 secured in a closed position over the orifice 535.

The wipes container 510 is openable and closable (e.g., as shown in FIG. 4) such that a user is able to replace the wipes cartridge disposed in the container 510. Any suitable fastening means known in the art may be used to secure the top and bottom container shells 570 and 580 together when the wipes container 510 is closed. As shown in FIG. 6A, an exemplary zipper-type fastener 504 may be used. It may be desirable to select a fastener and/or configure the container 510 such that the container 510 is substantially vapor impermeable when closed.

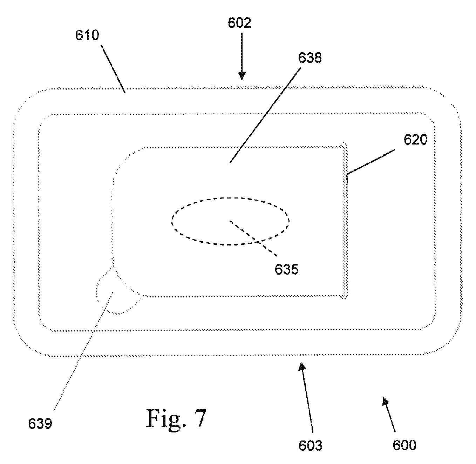

FIG. 7 shows a top view of an exemplary wipes product 600. The wipes product 600 includes a wipes container 610 and a refill cartridge disposed therein. The wipes container 610 has a dispensing orifice 635 that enables a user to access wipes stored inside the container 610, and which is aligned with an orifice in the refill cartridge. A flap 638, which is joined to the refill cartridge, extends through a channel 620 disposed in the top of the container 610 (e.g., through a major lid or a top shell). In this example, the channel 620 is positioned such that it is substantially perpendicular to the back edge 602 and front edge 603 of the wipes container 610. It is to be understood that the channel 620 may be positioned in any direction desired (e.g., diagonal). The flap 638 may includes a grasping tab 639 or other graspable feature. The flap 638 should be sized such that, when properly positioned, it substantially covers the orifice 635 of the container 610. In this example, the flap 638 acts as the key portion and the channel 620 acts as the locking portion.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A wipes product comprising:
a. a refillable wipes container (100) including
i. a major lid (130), a base (140), and one or more walls (141, 142, 143, 144), wherein the lid (130), base (140), and wall(s) define an interior storage space (110) for storing wipes,
ii. a dispensing orifice (135) disposed in the major lid (130) that enables a user to access wipes stored in the interior storage space (110), and **characterized in that**
iii. a lock portion disposed on the major lid (130), the lock portion being engageable with a key portion such that a substantially moisture impermeable barrier is formed over the dispensing orifice (135) when the lock portion and the key portion are engaged; and
b. a package of wipes (160) that includes the key portion, the package of wipes being disposed in the interior storage space (110).

2. The wipes product of claim 1, wherein the lock portion is a channel (220) in the major lid (130) and the key portion is a flap (438) that is extendable through the channel (220).

3. The wipes product of claim 2, wherein the flap (438) is formed from a moisture impermeable material and can be positioned over the dispensing orifice (135) when extended through the channel (220).

4. The wipes product of claims 2, wherein the wipes container (100) and the flap (438) include complementary portions of a fastening system for joining a portion of the flap (438) to a portion of the major lid (130).

5. The wipes product of claim 4, wherein the fastening system is at least one of an adhesive fastening system and a mechanical fastening system.

6. The wipes productof any of claims 2 to 5, wherein the flap (438) has a modulus of between 10 and 40 Pa.

7. The wipes product of any of the preceding claims, wherein the wipes container (100) is a rigid container.

8. The wipes productof any of claims 2 to 7, wherein the flap (438) includes a grasping portion (439).

9. The wipes productof any of claims 2 to 8, wherein the flap (438) is refastenably joined to the package of wipes (160).

10. The wipes productof any of the preceding claims, wherein the package of wipes (160) comprises packaging formed from a biodegradable material.

## Patentansprüche

1. Wischtuchprodukt, umfassend:
a. einen wiederbefüllbaren Wischtuchbehälter (100), umfassend
i. einen Hauptdeckel (130), eine Basis (140), und eine oder mehrere Wände (141, 142, 143, 144), wobei der Deckel (130), die Basis (140), und die Wand/Wände einen inneren Aufbewahrungsraum (110) zur Aufbewahrung von Wischtüchern definieren,
ii. eine Ausgabeöffnung (135), die in dem Hauptdeckel (130) angeordnet ist, die dem Benutzer den Zugriff auf die Wischtücher ermöglicht, die im inneren Aufbewahrungsraum (110) aufbewahrt werden, und die **dadurch gekennzeichnet ist, dass**
iii. ein Verschlussabschnitt auf dem Hauptdeckel (130) angeordnet ist, wobei der Verschlussabschnitt mit einem Schlüsselbereich derart in Eingriff sein kann, dass eine im Wesentlichen feuchtigkeitsundurchlässige Barriere über der Ausgabeöffnung (135) gebildet ist, wenn sich der Verschlussabschnitt und der Schlüsselabschnitt in Eingriff befinden; und
b. ein Wischtuchpäckchen (160), das den Schlüsselabschnitt beinhaltet, wobei das Wischtuchpäckchen im inneren Aufbewahrungsraum (110) angeordnet ist.

2. Wischtuchprodukt nach Anspruch 1, wobei der Verschlussabschnitt ein Kanal (220) im Hauptdeckel (130) ist und der Schlüsselabschnitt eine Klappe (438) ist, die durch den Kanal (220) verlängerbar ist.

3. Wischtuchprodukt nach Anspruch 2, wobei die Klappe (438) aus einem feuchtigkeitsundurchlässigen Material gebildet ist und über der Ausgabeöffnung (135) positioniert werden kann, wenn sie durch den Kanal (220) verlängert ist.

4. Wischtuchprodukt nach Ansprüchen 2, wobei der Wischtuchbehälter (100) und die Klappe (438) komplementäre Abschnitte eines Befestigungssystems zur Verbindung eines Abschnitts der Lasche (438) mit einem Abschnitt des Hauptdeckels (130) beinhalten.

5. Wischtuchprodukt nach Anspruch 4, wobei das Befestigungssystem wenigstens eines aus einem Klebebefestigungssystem und einem mechanischen Befestitungssystem ist.

6. Wischtuchprodukt nach einem der Ansprüche 2 bis 5, wobei die Lasche (438) einen Modul von zwischen 10 und 40 Pa aufweist.

7. Wischtuchprodukt nach einem der vorstehenden Ansprüche, wobei der Wischtuchbehälter (100) ein fester Behälter ist.

8. Wischtuchprodukt nach einem der Ansprüche 2 bis 7, wobei die Lasche (438) einen Halteabschnitt (439) beinhaltet.

9. Wischtuchprodukt nach einem der Ansprüche 2 bis 8, wobei die Lasche (438) wiederbefestigbar mit dem Wischtuchpäckchen (160) verbunden ist.

10. Wischtuchprodukt nach einem der vorstehenden Ansprüche, wobei das Wischtuchpäckchen (160) eine Verpackung umfasst, die aus einem biologisch abbaubaren Material gebildet ist.

## Revendications

1. Produit pour lingettes, comprenant :
a. un récipient à lingettes rechargeable (100) incluant
i. un couvercle principal (130), une base (140), et une ou plusieurs parois (141, 142,143,144), dans lequel le couvercle (130), la base (140), et la(les) paroi(s) définissent un espace de stockage intérieur (110) destiné au stockage de lingettes,
ii. un orifice de distribution (135) disposé dans le couvercle principal (130), lequel permet à un utilisateur d'accéder à des lingettes stockées dans l'espace de stockage intérieur (110), et **caractérisé par**
iii. une partie de verrouillage disposée sur le couvercle principal (130), la partie de verrouillage pouvant venir en prise avec une partie de clé de telle sorte qu'une barrière essentiellement imperméable à l'humidité est formée sur l'orifice de distribution (135) lorsque la partie de verrouillage et la partie de clé sont en prise ; et
b. un conditionnement de lingettes (160) qui inclut la partie de clé, le conditionnement de lingettes étant disposé dans l'espace de stockage intérieur (110).

2. Produit pour lingettes selon la revendication 1, dans lequel la partie de verrouillage est un canal (220) dans le couvercle principal (130) et la partie de clé est une patte (438) qui peut s'étendre à travers le canal (220).

3. Produit pour lingettes selon la revendication 2, dans lequel la patte (438) est formée d'un matériau imperméable à l'humidité et peut être positionnée au-dessus de l'orifice de distribution (135) lorsqu'elle est étendue à travers le canal (220).

4. Produit pour lingettes selon la revendication 2, dans lequel le récipient à lingettes (100) et la patte (438) incluent des parties complémentaires d'un système de fixation pour joindre une partie de la patte (438) à une partie du couvercle principal (130).

5. Produit pour lingettes selon la revendication 4, dans lequel le système de fixation est au moins l'un parmi un système de fixation adhésif et un système de fixation mécanique.

6. Produit pour lingettes selon l'une quelconque des revendications 2 à 5, dans lequel la patte (438) a un module compris entre 10 et 40 Pa.

7. Produit pour lingettes selon l'une quelconque des revendications précédentes, dans lequel le récipient à lingettes (100) est un récipient rigide.

8. Produit pour lingettes selon l'une quelconque des revendications 2 à 7, dans lequel la patte (438) inclut une partie de préhension (439).

9. Produit pour lingettes selon l'une quelconque des revendications 2 à 8, dans lequel la patte (438) est jointe de manière rattachable au conditionnement de lingettes (160).

10. Produit pour lingettes selon l'une quelconque des revendications précédentes, dans lequel le conditionnement de lingettes (160) comprend un conditionnement formé d'un matériau biodégradable.
